# EUROPEAN PATENT APPLICATION

(11) **EP 2 879 433 A1**
(43) Date of publication of application: **03.06.2015**
(21) Application number: 14187456.0
(22) Date of filing: 02.10.2014
(51) Int. Cl.: H04W 36/00, H04W 84/04

(54) **Method and apparatus for small cell enhancement in a wireless communication system**

(30) Priority: 04.10.2013 US 201361886850 P
(71) Applicant: Innovative Sonic Corporation, Taipei City 10049 (TW)
(72) Inventor: Kuo, Richard Lee-Chee, 10049 Taipei City (TW)
(74) Representative: Hoefer & Partner

(57) **Abstract**

Methods and apparatuses are for small cell enhancement in a wireless communication system. The method includes the user equipment (UE) receiving a first Radio Resource Control (RRC) message from the first cell to configure a second cell to the UE (505). The method further includes the UE receiving a first Medium Access Control (MAC) control element to activate the second cell (510). The method include the UE receiving a second MAC control element to deactivate the second cell, wherein a field is included in the second MAC control element to indicate which signal the UE should measure on the second cell after the second cell is deactivated (515).

## Description

### CROSS-REFERENCE TO RELATED APPLICATIONS

The present Application claims the benefit of U.S. Provisional Patent Application Serial No. 61/886,850 filed on October 4, 2013, the entire disclosure of which is incorporated herein by reference.

### FIELD

This disclosure generally relates to wireless communication networks, and more particularly, to methods and apparatuses for small cell enhancement in a wireless communication system.

### BACKGROUND

With the rapid rise in demand for communication of large amounts of data to and from mobile communication devices, traditional mobile voice communication networks are evolving into networks that communicate with Internet Protocol (IP) data packets. Such IP data packet communication can provide users of mobile communication devices with voice over IP, multimedia, multicast and on-demand communication services.

An exemplary network structure for which standardization is currently taking place is an Evolved Universal Terrestrial Radio Access Network (E-UTRAN). The E-UTRAN system can provide high data throughput in order to realize the above-noted voice over IP and multimedia services. The E-UTRAN system's standardization work is currently being performed by the 3GPP standards organization. Accordingly, changes to the current body of 3GPP standard are currently being submitted and considered to evolve and finalize the 3GPP standard.

### SUMMARY

Methods and apparatuses are disclosed for small cell enhancement in a wireless communication system and are defined in independent claims 1, 7, 13 and 14, respectively. The respective dependent claims define preferred embodiments thereof, respectively. The method according to one aspect includes the user equipment (UE) receiving a first Radio Resource Control (RRC) message from the first cell to configure a second cell to the UE. This method further includes the UE receiving a first Medium Access Control (MAC) control element to activate the second cell. This method also includes the UE receiving a second MAC control element to deactivate the second cell, wherein a field is included in the second MAC control element to indicate which signal the UE should measure on the second cell after the second cell is deactivated.

### BRIEF DESCRIPTION OF THE DRAWINGS

FIG. 1 shows a diagram of a wireless communication system according to one exemplary embodiment.
FIG. 2 is a block diagram of a transmitter system (also known as access network) and a receiver system (also known as user equipment or UE) according to one exemplary embodiment.
FIG. 3 is a functional block diagram of a communication system according to one exemplary embodiment.
FIG. 4 is a functional block diagram of the program code of FIG. 3 according to one exemplary embodiment.
FIG. 5 is a flow diagram illustrating one exemplary embodiment.
FIG. 6 is a flow diagram illustrating another exemplary embodiment.

### DETAILED DESCRIPTION

The exemplary wireless communication systems and devices described below employ a wireless communication system, supporting a broadcast service. Wireless communication systems are widely deployed to provide various types of communication such as voice, data, and so on. These systems may be based on code division multiple access (CDMA), time division multiple access (TDMA), orthogonal frequency division multiple access (OFDMA), 3GPP LTE (Long Term Evolution) wireless access, 3GPP LTE-A or LTE-Advanced (Long Term Evolution Advanced), 3GPP2 UMB (Ultra Mobile Broadband), WiMax, or some other modulation techniques.

In particular, the exemplary wireless communication systems devices described below may be designed to support one or more standards such as the standard offered by a consortium named "3rd Generation Partnership Project" referred to herein as 3GPP, including Document Nos. RP-122032, "Study on Small Cell enhancements for E-UTRA and E-UTRAN-Physical-layer aspects", TR36.872-101, "Small Cell Enhancements for E-UTRA and E-UTRAN - Physical layer Aspects (Release 12)", TS36.331 V11.4.0, "E-UTRA RRC protocol specification", and TS36.321 V11.3.0, "E-UTRA MAC protocol specification." The standards and documents listed above are hereby expressly incorporated by reference in their entirety.

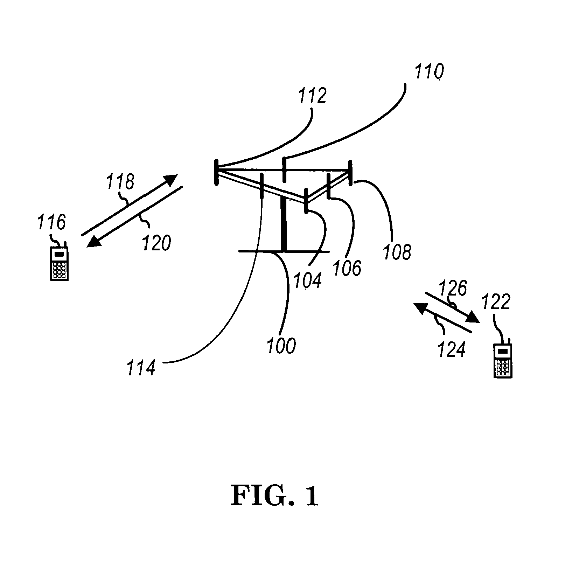

FIG. 1 shows a multiple access wireless communication system according to one embodiment of the invention. An access network 100 (AN) includes multiple antenna groups, one including 104 and 106, another including 108 and 110, and an additional including 112 and 114. In FIG. 1, only two antennas are shown for each antenna group, however, more or fewer antennas may be utilized for each antenna group. Access terminal 116 (AT) is in communication with antennas 112 and 114, where antennas 112 and 114 transmit information to access terminal 116 over forward link 120 and receive information from access terminal 116 over reverse link 118. Access terminal (AT) 122 is in communication with antennas 106 and 108, where antennas 106 and 108 transmit information to access terminal (AT) 122 over forward link 126 and receive information from access terminal (AT) 122 over reverse link 124. In a FDD system, communication links 118, 120, 124 and 126 may use different frequency for communication. For example, forward link 120 may use a different frequency then that used by reverse link 118.

Each group of antennas and/or the area in which they are designed to communicate is often referred to as a sector of the access network. In the embodiment, antenna groups each are designed to communicate to access terminals in a sector of the areas covered by access network 100.

In communication over forward links 120 and 126, the transmitting antennas of access network 100 may utilize beamforming in order to improve the signal-to-noise ratio of forward links for the different access terminals 116 and 122. Also, an access network using beamforming to transmit to access terminals scattered randomly through its coverage causes less interference to access terminals in neighboring cells than an access network transmitting through a single antenna to all its access terminals.

An access network (AN) may be a fixed station or base station used for communicating with the terminals and may also be referred to as an access point, a Node B, a base station, an enhanced base station, an eNB, or some other terminology. An access terminal (AT) may also be called user equipment (UE), a wireless communication device, terminal, access terminal or some other terminology.

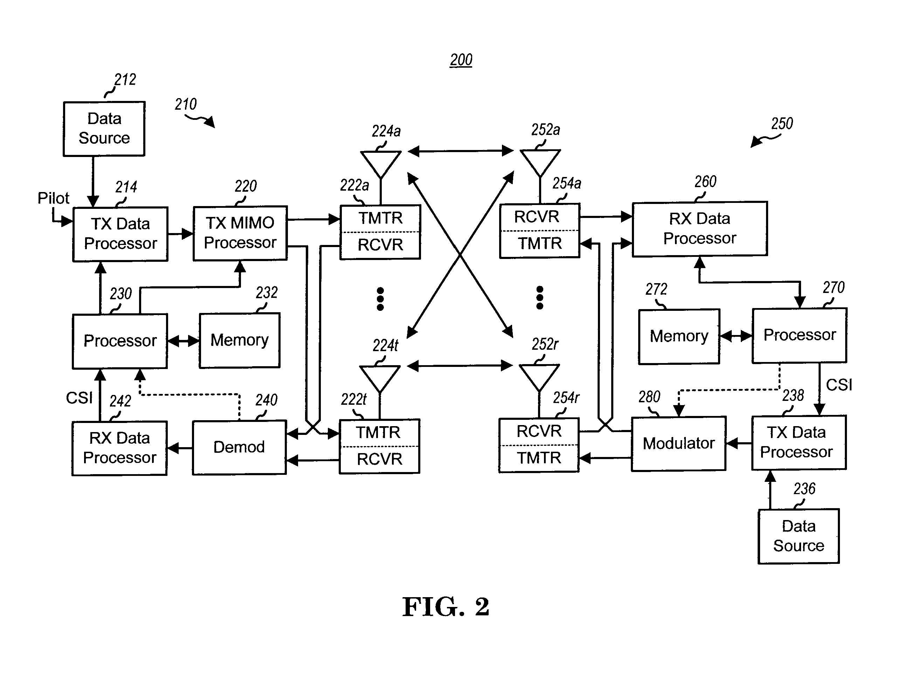

FIG. 2 is a simplified block diagram of an embodiment of a transmitter system 210 (also known as the access network) and a receiver system 250 (also known as access terminal (AT) or user equipment (UE)) in a MIMO system 200. At the transmitter system 210, traffic data for a number of data streams is provided from a data source 212 to a transmit (TX) data processor 214.

In one embodiment, each data stream is transmitted over a respective transmit antenna. TX data processor 214 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QPSK, M-PSK, or M-QAM) selected for that data stream to provide modulation symbols. The data rate, coding, and modulation for each data stream may be determined by instructions performed by processor 230.

The modulation symbols for all data streams are then provided to a TX MIMO processor 220, which may further process the modulation symbols (e.g., for OFDM). TX MIMO processor 220 then provides *N_{T}* modulation symbol streams to *N_{T}* transmitters (TMTR) 222a through 222t. In certain embodiments, TX MIMO processor 220 applies beamforming weights to the symbols of the data streams and to the antenna from which the symbol is being transmitted.

Each transmitter 222 receives and processes a respective symbol stream to provide one or more analog signals, and further conditions (e.g., amplifies, filters, and upconverts) the analog signals to provide a modulated signal suitable for transmission over the MIMO channel. *N_{T}* modulated signals from transmitters 222a through 222t are then transmitted from *N_{T}* antennas 224a through 224t, respectively.

At receiver system 250, the transmitted modulated signals are received by *N_{R}* antennas 252a through 252r and the received signal from each antenna 252 is provided to a respective receiver (RCVR) 254a through 254r. Each receiver 254 conditions (e.g., filters, amplifies, and downconverts) a respective received signal, digitizes the conditioned signal to provide samples, and further processes the samples to provide a corresponding "received" symbol stream.

An RX data processor 260 then receives and processes the *N_{R}* received symbol streams from *N_{R}* receivers 254 based on a particular receiver processing technique to provide *N_{T}* "detected" symbol streams. The RX data processor 260 then demodulates, deinterleaves, and decodes each detected symbol stream to recover the traffic data for the data stream. The processing by RX data processor 260 is complementary to that performed by TX MIMO processor 220 and TX data processor 214 at transmitter system 210.

A processor 270 periodically determines which pre-coding matrix to use (discussed below). Processor 270 formulates a reverse link message comprising a matrix index portion and a rank value portion.

The reverse link message may comprise various types of information regarding the communication link and/or the received data stream. The reverse link message is then processed by a TX data processor 238, which also receives traffic data for a number of data streams from a data source 236, modulated by a modulator 280, conditioned by transmitters 254a through 254r, and transmitted back to transmitter system 210.

At transmitter system 210, the modulated signals from receiver system 250 are received by antennas 224, conditioned by receivers 222, demodulated by a demodulator 240, and processed by a RX data processor 242 to extract the reserve link message transmitted by the receiver system 250. Processor 230 then determines which pre-coding matrix to use for determining the beamforming weights then processes the extracted message.

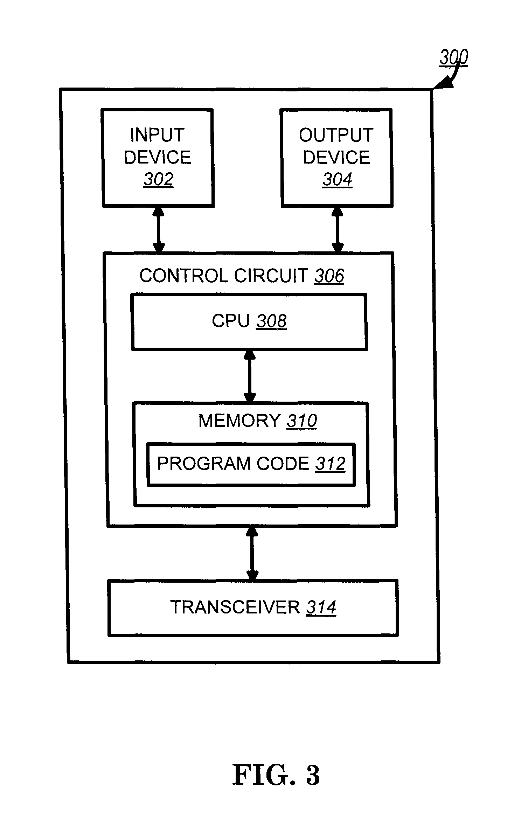

Turning to FIG. 3, this figure shows an alternative simplified functional block diagram of a communication device according to one embodiment of the invention. As shown in FIG. 3, the communication device 300 in a wireless communication system can be utilized for realizing the UEs (or ATs) 116 and 122 in FIG. 1, and the wireless communications system is preferably the LTE system. The communication device 300 may include an input device 302, an output device 304, a control circuit 306, a central processing unit (CPU) 308, a memory 310, a program code 312, and a transceiver 314. The control circuit 306 executes the program code 312 in the memory 310 through the CPU 308, thereby controlling an operation of the communications device 300. The communications device 300 can receive signals input by a user through the input device 302, such as a keyboard or keypad, and can output images and sounds through the output device 304, such as a monitor or speakers. The transceiver 314 is used to receive and transmit wireless signals, delivering received signals to the control circuit 306, and outputting signals generated by the control circuit 306 wirelessly.

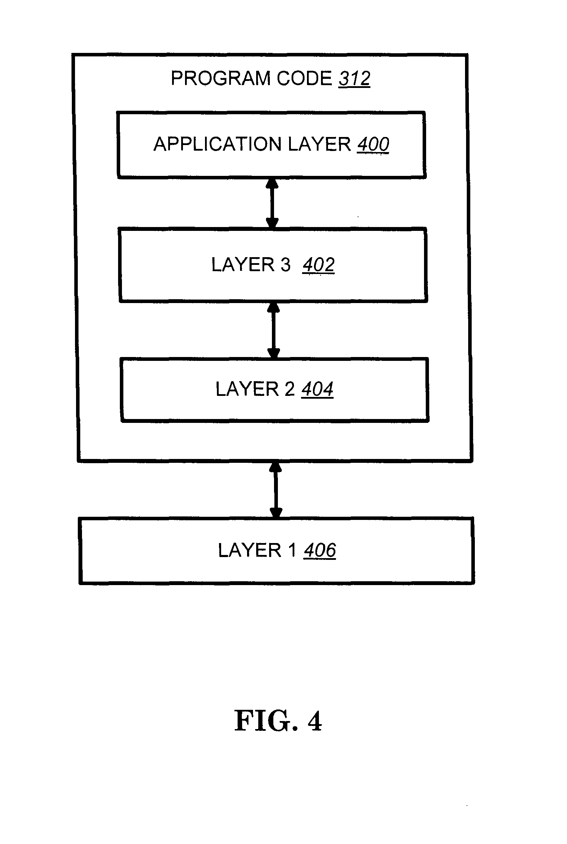

FIG. 4 is a simplified block diagram of the program code 312 shown in FIG. 3 in accordance with one embodiment of the invention. In this embodiment, the program code 312 includes an application layer 400, a Layer 3 portion 402, and a Layer 2 portion 404, and is coupled to a Layer 1 portion 406. The Layer 3 portion 402 generally performs radio resource control. The Layer 2 portion 404 generally performs link control. The Layer 1 portion 406 generally performs physical connections.

For LTE or LTE-A systems, the Layer 2 portion may include a Radio Link Control (RLC) layer and a Medium Access Control (MAC) layer. The Layer 3 portion may include a Radio Resource Control (RRC) layer.

In 3GPP RP-122032, a new study item for small cell enhancements on physical layer aspects for release-12 was disclosed. The objective of this study item is described in 3GPP RP-122032 as follows:

### 4 Objective

The objective of this study is to identify potential enhancements to improve the spectrum efficiency as well as efficient small cell deployment and operation in order to meet the requirements targeted for small cell enhancements in the identified scenarios in TR36.932, and evaluate the corresponding gain, standardization impact and complexity.

The study shall focus on the following areas:
- Define the channel characteristics of the small cell deployments and the UE mobility scenarios identified in TR36.932, as well as the corresponding evaluation methodology and metrics.
- Study potential enhancements to improve the spectrum efficiency, i.e. achievable user throughput in typical coverage situations and with typical terminal configurations, for small cell deployments, including
   o Introduction of a higher order modulation scheme (e.g. 256 QAM) for the downlink.
   o Enhancements and overhead reduction for UE-specific reference signals and control signaling to better match the scheduling and feedback in time and/or frequency to the channel characteristics of small cells with low UE mobility, in downlink and uplink based on existing channels and signals.
- Study the mechanisms to ensure efficient operation of a small cell layer composed of small cell clusters. This includes
   o Mechanisms for interference avoidance and coordination among small cells adapting to varying traffic and the need for enhanced interference measurements, focusing on multi-carrier deployments in the small cell layer and dynamic on/off switching of small cells.
   o Mechanisms for efficient discovery of small cells and their configuration.
- Physical layer study and evaluation for small cell enhancement higher-layer aspects, in particular concerning the benefits of mobility enhancements and dual connectivity to macro and small cell layers and for which scenarios such enhancements are feasible and beneficial.

The study should address small cell deployments on both a separate and the same frequency layer as the macro cells, taking into account existing mechanisms (e.g., CoMP, FeICIC) wherever applicable.

Coordinated and time synchronized operation of the small cell layer and between small cells and the macro layer can be assumed for specific operations and feasibility and benefits of radio-interface based synchronization mechanisms shall be addressed.

Backward compatibility, i.e. the possibility for legacy (pre-R12) UEs to access a small-cell node/carrier, shall be guaranteed (except for features studied for small-cells using NCT) and the ability for legacy (pre-Rel-12) UEs to benefit from small-cell enhancements can be considered, which shall be taken into account in the evaluation of the different proposed enhancements. The introduction of non-backwards compatible features should be justified by sufficient gains.

This study item shall consider the work of other related study/work item(s) in Rel-12.

3GPP TR36.872 contains the result of the study item "Small Cell Enhancements for E-UTRA and E-UTRAN - Physical-layer Aspects" and describes the mechanisms to reduce the time scales for small cell on/off transitions as quoted below:

### 3.1 Definitions

### 7.1.1.3.2 Feasible time scales enhancements

Faster transitions for small cell on/off have also been discussed, mainly based on discovery enhancement and dual connectivity.
- Utilizing discovery signals. Discovery signals may be sent from a turned-off small cell and UE can perform necessary measurements. The measurements may be utilized so that additional measurement duration after the cell is turned on can be significantly reduced (to, e.g. tens of milliseconds or even shorter).
- Utilizing dual connectivity. Legacy handover procedures may be streamlined under the assumptions such as dual connectivity. Dual connectivity may allow a faster transition by reducing/eliminating the needs for handover to and from a small cell performing on/off. Once dual connectivity between a UE and a small cell is configured, the activation/deactivation of the cell based on a procedure similar to carrier aggregation may be used, and the time scale may be in the tens of milliseconds level or possibly even less.

To summarize, with enhanced procedures based on discovery signals during small cell off and dual connectivity operations, small cell on/off feasible time scales can be reduced to less than 100milliseconds.

According to 3GPP TR36.872, the time scale of small cell on/off transitions can be reduced by utilizing discovery signals and dual connectivity, which can eliminate the need of handover to and from a small cell. For example, Secondary Cell (Scell) related procedures (i.e., SCell addition/removal (as discussed in TS36.331 V11.4.0) and SCell activation/deactivation (as discussed in TS36.321 V11.3.0)) can be used in place of the handover procedure (as defined in TS36.331 V11.4.0)). However, further enhancement to support small cell on/off transitions should be considered.

A potential use case of applying dual connectivity for small cell on/off transitions is described below:
(1) a UE (User Equipment) is served by a macro cell;
(2) the UE receives an RRC (Radio Resource Control) message to add a small cell to the UE (as defined in TS36.331 V11.4.0);
(3) the UE receives an MAC (Medium Access Control) control element to activate the small cell (as defined in TS36.321 V11.3.0));
(4) the UE communicates with the small cell;
(5) the UE receives an MAC control element to deactivate the small cell (because the small cell is off due to less UEs connecting to the small cell);
(6) the UE communicates with the macro cell;
(7) the UE receives an MAC control element to activate the small cell (because the small cell is on due to many UEs entering the small cell); or
(8) the UE communicates with the small cell.
Items 5-8 disclosed above may be repeated due to multiple small cell on/off transitions.

In Rel-11, an SCell may be deactivated because of poor reception quality. In this situation, the UE needs to perform measurements on the cell-specific reference signal (CRS) of a SCell after this SCell has been deactivated so that it could be activated again later if the reception quality becomes better again. Now, there is a new situation for a macro evolved Node B (eNB) to deactivate a SCell (or a small cell), i.e., the SCell is turned off when fewer UEs connecting to the SCell. In this new situation, according to the invention, the UE should measure the discovery signal of the small cell instead. Therefore, the UE should be aware of which signal to measure after the SCell is deactivated.

In one embodiment, a straightforward way is to apply the legacy measurement reconfiguration procedure to indicate the measured signal. For example, the macro eNB sends a Radio Resource Control (RRC) Connection Reconfiguration message to modify the measurement configuration every time when the SCell is deactivated. In view of short time scale of small cell on/off transitions (about 100 ms), there is too much overhead for sending many RRC Connection Reconfiguration messages due to multiple small cell on/off transitions.

Accordingly, in one embodiment, it would be more efficient in terms of signaling resource usage for the macro eNB to include a field in the Activation/Deactivation MAC control element to indicate which signal (namely the discovery signal or the CRS) of the small cell should be measured assuming that the UE had already received the configuration of the discovery signal before (e.g., when the small cell is configured to the UE or when measurement on the small cell is firstly configured to the UE). In an alternate embodiment, a new MAC control element or PDCCH (Physical Downlink Control Channel) signaling can be defined for the macro eNB to indicate to the UE which signal of the small cell should be measured.

In another embodiment, the macro eNB sends a signaling to the UE to indicate whether the small cell is on or off. Based on this indicator, the UE can determine which signal of the small cell should be measured.

In yet another embodiment, the discovery signal can be newly designed. In another embodiment, the discovery signal can be formed from a legacy signal with reduced periodicity. Examples of such legacy signal include PSS (Primary Synchronization Signal), SSS (Secondary Synchronization Signal, and CRS. All of the embodiments indicated in paragraphs [0036] to [0039] can be combined in any combination of two or more of the embodiments. Also, alternatives or embodiments that are described as alternatives might be combined with any other of the embodiments, e.g. for a method or device that performs both or more of the embodiments in combination or alternatively.

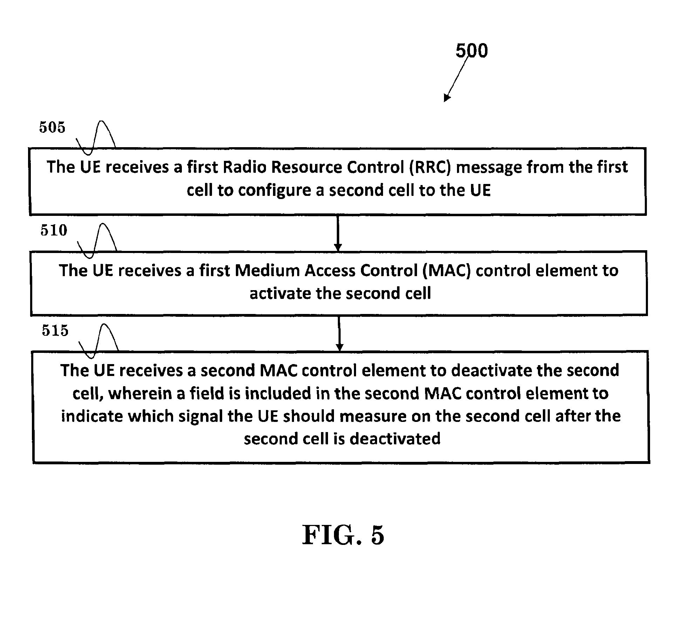

FIG. 5 illustrates one exemplary method 500 for changing a measured signal on a cell, wherein a user equipment (UE) is served by a first cell, according to the invention. At step 505, the UE receives a first Radio Resource Control (RRC) message from the first cell to configure a second cell to the UE. At step 510, the UE receives a first Medium Access Control (MAC) control element to activate the second cell. At step 515, the UE receives a second MAC control element to deactivate the second cell, wherein a field is included in the second MAC control element to indicate which signal the UE should measure on the second cell after the second cell is deactivated.

Referring back to FIGS. 3 and 4, the device 300 includes a program code 312 stored in memory 310 for changing measured signal on a cell, wherein a UE is served by a first cell. In one embodiment thereof, the CPU 308 could execute program code 312 to enable the UE (i) to receive a first RRC message from the first cell to configure a second cell to the UE, (ii) to receive a first MAC control element to activate the second cell, and (iii) to receive a second MAC control element to deactivate the second cell, wherein a field is included in the second MAC control element to indicate which signal the UE should measure on the second cell after the second cell is deactivated. In addition, the CPU 308 can execute the program code 312 to perform all of the above-described actions and steps or others described herein, in particular those as described in paragraph [0040] above.

In the exemplary method described in paragraph [0040] and/or the communication device described in paragraph [0041], preferably the first RRC message includes a configuration of a discovery signal on the second cell. Alternatively, the first RRC message is a RRC Connection Reconfiguration message. Alternatively or additionally, preferably the first MAC control element is an Activation/Deactivation MAC control element. Further, alternatively or additionally, preferably the second MAC control element is an Activation/Deactivation MAC control element. Still further, alternatively or additionally, preferably those signals for the UE to measure contain at least a discovery signal and a cell-specific reference signal (CRS). Still further, alternatively or additionally, preferably the discovery signal is formed from a legacy signal having a reduced periodicity, wherein the legacy signal is a Primary Synchronization Signal (PSS)/Secondary Synchronization Signal (SSS) or CRS. Still further, alternatively or additionally, preferably the discovery signal on the second cell is transmitted by the second cell for the UE to discover the second cell.

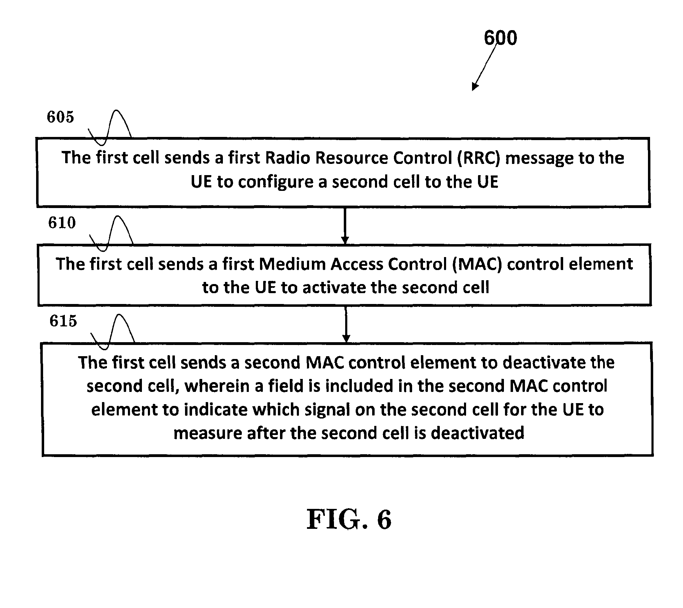

FIG. 6 illustrates another exemplary method 600 changing a measured signal on a cell, wherein a first cell serves a UE, according to the invention. At step 605, the first cell sends a first Radio Resource Control (RRC) message to the UE to configure a second cell to the UE. At step 610, the first cell sends a first Medium Access Control (MAC) control element to the UE to activate the second cell. At step 615, the first cell sends a second MAC control element to deactivate the second cell, wherein a field is included in the second MAC control element to indicate which signal on the second cell for the UE to measure after the second cell is deactivated.

Referring back to FIGS. 3 and 4, the device 300 includes a program code 312 stored in memory 310 for changing measured signal on a cell, wherein a first cell serves a UE. In one embodiment thereof, the CPU 308 could execute program code 312 to enable the first cell to (i) to send a first RRC message to the UE to configure a second cell to the UE, (ii) to send a first MAC control element to the UE to activate the second cell, and (iii) to send a second MAC control element to deactivate the second cell, wherein a field is included in the second MAC control element to indicate which signal on the second cell for the UE to measure after the second cell is deactivated. In addition, the CPU 308 can execute the program code 312 to perform all of the above-described actions and steps or others described herein, in particular those described in paragraph [0043] above.

In the other exemplary method described in paragraph [0043] and/or the communication device described in paragraph [0044], preferably the first RRC message includes a configuration of a discovery signal on the second cell. Alternatively, the first RRC message is a RRC Connection Reconfiguration message. Alternatively or additionally, preferably the first MAC control element is an Activation/Deactivation MAC control element. Further, alternatively or additionally, preferably the second MAC control element is an Activation/Deactivation MAC control element. Still further, alternatively or additionally, preferably those signals for the UE to measure contain at least a discovery signal and a cell-specific reference signal (CRS). Still further, alternatively or additionally, preferably the discovery signal is formed from a legacy signal having a reduced periodicity, in which the legacy signal could be a Primary Synchronization Signal (PSS)/Secondary Synchronization Signal (SSS) or CRS. Still further, alternatively or additionally, preferably the discovery signal on the second cell is transmitted by the second cell for the UE to discover the second cell.

Various aspects of the disclosure have been described above. It should be apparent that the teachings herein may be embodied in a wide variety of forms and that any specific structure, function, or both being disclosed herein is merely representative. Based on the teachings herein one skilled in the art should appreciate that an aspect disclosed herein may be implemented independently of any other aspects and that two or more of these aspects may be combined in various ways. For example, an apparatus may be implemented or a method may be practiced using any number of the aspects set forth herein. In addition, such an apparatus may be implemented or such a method may be practiced using other structure, functionality, or structure and functionality in addition to or other than one or more of the aspects set forth herein. As an example of some of the above concepts, in some aspects concurrent channels may be established based on pulse repetition frequencies. In some aspects concurrent channels may be established based on pulse position or offsets. In some aspects concurrent channels may be established based on time hopping sequences. In some aspects concurrent channels may be established based on pulse repetition frequencies, pulse positions or offsets, and time hopping sequences.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, processors, means, circuits, and algorithm steps described in connection with the aspects disclosed herein may be implemented as electronic hardware (e.g., a digital implementation, an analog implementation, or a combination of the two, which may be designed using source coding or some other technique), various forms of program or design code incorporating instructions (which may be referred to herein, for convenience, as "software" or a "software module"), or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

In addition, the various illustrative logical blocks, modules, and circuits described in connection with the aspects disclosed herein may be implemented within or performed by an integrated circuit ("IC"), an access terminal, or an access point. The IC may comprise a general purpose processor, a digital signal processor (DSP), an application specific integrated circuit (ASIC), a field programmable gate array (FPGA) or other programmable logic device, discrete gate or transistor logic, discrete hardware components, electrical components, optical components, mechanical components, or any combination thereof designed to perform the functions described herein, and may execute codes or instructions that reside within the IC, outside of the IC, or both. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

It is understood that any specific order or hierarchy of steps in any disclosed process is an example of a sample approach. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

The steps of a method or algorithm described in connection with the aspects disclosed herein may be embodied directly in hardware, in a software module executed by a processor, or in a combination of the two. A software module (e.g., including executable instructions and related data) and other data may reside in a data memory such as RAM memory, flash memory, ROM memory, EPROM memory, EEPROM memory, registers, a hard disk, a removable disk, a CD-ROM, or any other form of computer-readable storage medium known in the art. A sample storage medium may be coupled to a machine such as, for example, a computer/processor (which may be referred to herein, for convenience, as a "processor") such the processor can read information (e.g., code) from and write information to the storage medium. A sample storage medium may be integral to the processor. The processor and the storage medium may reside in an ASIC. The ASIC may reside in user equipment. In the alternative, the processor and the storage medium may reside as discrete components in user equipment. Moreover, in some aspects any suitable computer-program product may comprise a computer-readable medium comprising codes relating to one or more of the aspects of the disclosure. In some aspects a computer program product may comprise packaging materials.

While the invention has been described in connection with various aspects, it will be understood that the invention is capable of further modifications. This application is intended to cover any variations, uses or adaptation of the invention following, in general, the principles of the invention, and including such departures from the present disclosure as come within the known and customary practice within the art to which the invention pertains.

## Claims

1. A method for changing a measured signal on a cell, wherein a user equipment, in the following also referred to as UE, is served by a first cell, the method comprising:
receiving, by the UE, a first Radio Resource Control, in the following also referred to as RRC, message from the first cell to configure a second cell to the UE (505);
receiving, by the UE, a first Medium Access Control, in the following also referred to as MAC, control element to activate the second cell (510); and
receiving, by the UE, a second MAC control element to deactivate the second cell,
wherein a field is included in the second MAC control element to indicate which signal the UE should measure on the second cell after the second cell is deactivated (515).

2. The method of claim 1, wherein the first MAC control element is an Activation/Deactivation MAC control element, and/or wherein the second MAC control element is an Activation/Deactivation MAC control element.

3. The method of claim 1 or 2, wherein the first RRC message includes a configuration of a discovery signal on the second cell, or wherein the first RRC message is a RRC Connection Reconfiguration message.

4. The method of anyone of claims 1 to 3, wherein those signals for the UE to measure contain at least a discovery signal and a cell-specific reference signal, in the following also referred to as CRS.

5. The method of claim 3 or 4, wherein the discovery signal is formed from a legacy signal having a reduced periodicity, wherein the legacy signal is a Primary Synchronization Signal, in the following also referred to as PSS,/Secondary Synchronization Signal, in the following also referred to as SSS, or CRS.

6. The method of claim 3, 4 or 5, wherein the discovery signal on the second cell is transmitted by the second cell for the UE to discover the second cell.

7. A method for changing measured signal on a cell, wherein a first cell serves a user equipment, in the following also referred to as UE, the method comprising:
sending, by the first cell, a first Radio Resource Control, in the following also referred to as RRC, message to the UE to configure a second cell to the UE (605);
sending, by the first cell, a first Medium Access Control, in the following also referred to as MAC, control element to the UE to activate the second cell (610); and
sending, by the first cell, a second MAC control element to deactivate the second cell,
wherein a field is included in the second MAC control element to indicate which signal on the second cell for the UE to measure after the second cell is deactivated (615).

8. The method of claim 7, wherein the first MAC control element is an Activation/Deactivation MAC control element, and/or wherein the second MAC control element is an Activation/Deactivation MAC control element.

9. The method of claim 7 or 8, wherein the first RRC message includes a configuration of a discovery signal on the second cell, or wherein the first RRC message is a RRC Connection Reconfiguration message.

10. The method of anyone of claims 7 to 9, wherein those signals for the UE to measure contain at least a discovery signal and a cell-specific reference signal, in the following also referred to as CRS.

11. The method of claim 9 or 10, wherein the discovery signal is formed from a legacy signal having a reduced periodicity, wherein the legacy signal is a Primary Synchronization Signal, in the following also referred to as PSS,/Secondary Synchronization Signal, in the following also referred to as SSS, or CRS.

12. The method of claim 9, 10 or 11, wherein the discovery signal on the second cell is transmitted by the second cell for the UE to discover the second cell.

13. A communication device (300) for changing a measured signal on a cell, wherein a user equipment, in the following also referred to as UE, is served by a first cell, the communication device (300) comprising:
a control circuit (306);
a processor (308) installed in the control circuit (306);
a memory (310) installed in the control circuit (306) and operatively coupled to the
processor (310);
wherein the processor (310) is configured to execute a program code (312) stored in the memory (310) to enable the UE to perform the method steps as defined in anyone of claims 1 to 6.

14. A communication device (300) for changing a measured signal on a cell, wherein a first cell serves a user equipment, in the following also referred to as UE, the communication device (300) comprising:
a control circuit (306);
a processor (308) installed in the control circuit (306);
a memory (310) installed in the control circuit (306) and operatively coupled to the processor (310);
wherein the processor (310) is configured to execute a program code (312) stored in the memory (310) to enable the first cell to perform the method steps as defined in anyone of claims 7 to 12.
